# EUROPEAN PATENT APPLICATION

(11) **EP 1 768 411 A1**
(43) Date of publication of application: **28.03.2007**
(21) Application number: 05291960.2
(22) Date of filing: 21.09.2005
(51) Int. Cl.: H04N 7/18, H04N 5/232

(54) **Television camera system and respective configuring method**

(71) Applicant: Thomson Licensing, 92100 Boulogne (FR)
(72) Inventor: Van Geel, Martinus, 4931 VK Geertruidenberg (NL); Hommel, John, 4681 BM Nieuw Vossemeer (NL); Pot, Robert, 5121 EN Rijen (NL)

(57) **Abstract**

A software-controlled television camera system comprises a camera head (1), a memory (8), a communication interface for receiving an operating software and storing it in said memory (8), and a processing unit (4-6) for controlling operation of the system by executing the software stored in said memory. The processing unit (4-6) is adapted to execute operating software stored in a first region of said memory (8) and to check for the presence of operating software in a second region of the memory (8) and, in case of operating software being found in said second region, replacing by it software stored in the first region.

## Description

### FIELD OF THE INVENTION

The present invention relates to a software-controlled television camera system and a method for configuring such a system.

### BACKGROUND

In camera systems of this type, the role of software is shifting progressively from the mere handling of control tasks towards performing algorithms on video data, i. e. from determining the way in which the video data are obtained to processes which are carried out on the video data themselves. A consequence of this trend is that the data processing capacity built into modern camera systems is increasing progressively, and so is the amount of control software which is stored in such a system, reaching amounts of several megabytes.

Implementing functions of the camera system by software has the advantage that the operation of the camera system can be improved or enhanced by a replacement of the software alone. WO02/41273 A1 discloses a camera system in which software is used for determining whether or not one or more events such as burglary or a fire occur in a scene observed by the camera, and a remote software update function is provided in order to enable the camera to detect events of other types.

When such a remote update is carried out, there is a risk that when the transmission of the update software fails, the camera system is left in a state in which neither the old nor the new software version is operable, leading to downtime of the camera system which leaves the user dissatisfied. In the worst case, if a portion of the software is affected which is responsible for the download of the new version, it may become necessary to have the camera repaired by a specialist.

Since modern television camera systems are often formed of a variety of different components, e. g. of several camera heads which cooperate with one base station where video signals from the various camera heads are collected and processed, or with a processing unit comprising replaceable circuit boards, which are adapted to carry out various processing tasks on the video data, a need for updating the operating software of the camera system may arise frequently, whenever camera heads and/or circuit boards are exchanged. Under these circumstances, it is important to make the updating procedure as safe as possible.

### SUMMARY OF THE INVENTION

The present invention addresses this problem by providing a software controlled camera system, in particular a television camera system, comprising a camera head, a memory, a communication interface for receiving an operating software and storing it in said memory and a processing unit for controlling operation of the camera head by executing the software stored in said memory, which is characterized in that the processing unit is adapted to execute operating software stored in the first region of said memory and to check for the presence of operating software in a second region of the memory and, in case of operating software being found in said second region, overwriting it by software stored in the first region. In this way, it is ensured that the software in the first region is overwritten only if a replacement for it is present in the second region, already. Transmission errors which may occur during download from the outside to the second region can thus be corrected before an attempt at overwriting the software in the first region is made. If the overwriting process should fail due to the occurrence of a blackout or brownout condition, it can be repeated as soon as the system is provided with operating power again.

The operating software in the first region is preferably formed of a plurality of modules of different types, in which case the processing unit is adapted to determine a type of a software module found in the second region and to select the module of the same type in the first region for overwriting. In this way not all software in the first region has to be overwritten for an update, whereby the time required for a software update is reduced.

Memory should be provided for storing an indication of the type of a module stored in the second region.

The storage capacity of the second region should be at least the size of the largest one of the modules of the first region, so that a new version of this module may be downloaded completely into the second region before transferring it to the first.

Further, memory should be provided for storing an indication of whether software is stored in the second region or not.

The camera system of the present invention may comprise a plurality of camera heads. In that case, the processing unit may be implemented in a base station to which the camera heads are connected and which controls operation of these.

The camera heads may be of different types, and there is at least one type of software module specific to each type of camera head stored in the system, enabling each type of camera head to be optimally controlled. Thus, if a software module specific to one type of camera head is updated, the operation of others is not affected.

Alternatively, the processing unit may comprise a plurality of circuit boards, at least one of which is replaceable and is adapted to process video data from the camera head by executing said operating software. In this case, the camera head and the processing unit may be combined within a single physical unit.

Downloading new software into the camera system may take considerable time, especially if large amounts of data in the order of megabytes have to be transferred. There are fast communication protocols available for the communication interface of the camera system, e. g. the so-called boundary scan protocol (IEEE1149.1). If such a fast protocol is used for the download, the access time of the memory, in particular of the second region thereof, may become a bottleneck. By forming at least said second region of the memory of a plurality of storage devices and assigning successive storage addresses to different ones of said devices, it is possible to transfer data to the memory at a higher rate.

The object of the invention is further achieved by a method of configuring a software controlled television camera system to comprising the steps of downloading a new version of an operating software to a memory of the camera system and of executing said downloaded new version, which is characterized in that in the downloading step, the new version is first downloaded to a second region of said memory, and a new version is transferred from the second region to a first region of the memory for execution only if it is decided that the download was successful.

This decision is preferably made based on a flag indicating the presence of downloaded software in the second region, which is set when the downloading step is completed.

After successfully transferring the new software to the first region, the flag should be reset.

If a prior operating software stored in the first memory region is formed of a plurality of modules of different types, the downloaded new software is preferably accompanied by information specifying a module type of the new software, and when transferring the new software to the first memory region the prior operating software module of this type is overwritten.

### SHORT DESCRIPTION OF THE DRAWINGS

Further features and advantages of the invention will become apparent from the subsequent description of embodiments thereof referring to the appended drawings.

In the drawings,
- Fig. 1: is a block diagram of a first embodiment of a camera system according to the present invention;
- Fig. 2: is a block diagram of a second embodiment of the camera system;
- Fig. 3: is a flowchart of a method of configuring the systems of Fig. 1 and 2; and
- Fig. 4: is a detail of a third embodiment of the camera system.

### DESCRIPTION OF PREFERRED EMBODIMENTS

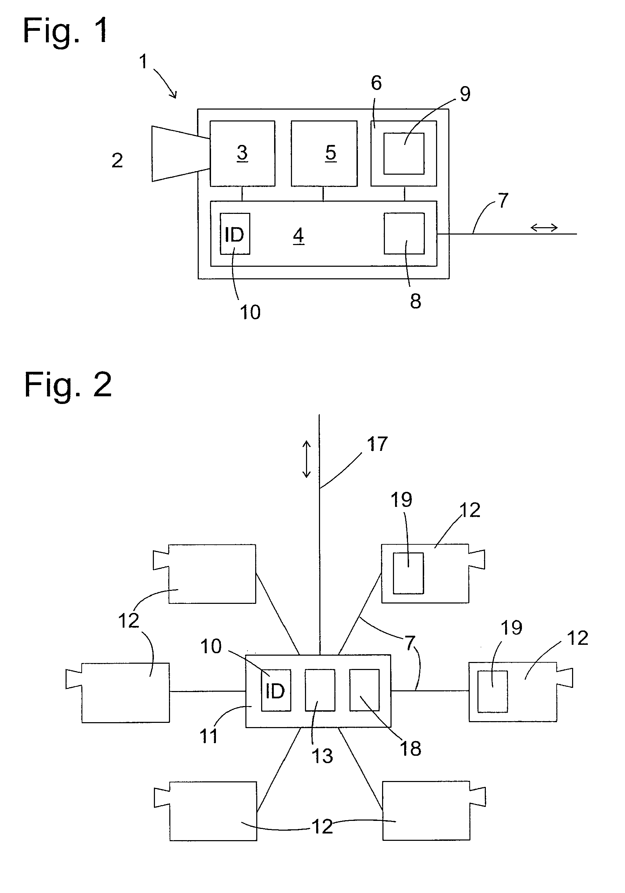

Fig. 1 is a block diagram of a camera unit. A camera head 1 comprises a lens 2, an image sensor on which an image is projected by lens 2 and an image sensor circuit board 3 on which circuitry for carrying out a first, preliminary processing of raw data from the image sensor may be installed. A motherboard 4 has various sockets in which the image sensor circuit board 3 and processing boards 5, 6 for carrying out further processing steps on the video data image sensor circuit board 3 are replaceably inserted. The various boards 3 to 6 are installed in a common casing which also supports the lens 2, so that the camera unit forms a compact physical unit. A data line 7 for transmitting video data to an external unit, not shown, e. g. a base station, and for receiving processing software and operating instructions from there extends from motherboard 4.

On the motherboard 4, a memory 8 is installed, which is referred to in the following as the software pool. Alternatively, the software pool might be provided on a separate circuit board which is replaceably plugged into one of the sockets of the motherboard, thus enabling a user to modify the way the entire camera unit operates by replacing its software pool.

The software pool is formed of flash memory devices or other types of memory devices which maintain their data intact when operating power is off.

The software pool 8 is divided into a first region in which a variety of software modules of different types is stored, and a second region, the function of which is explained later on. In the first region, the software modules are stored together with information indicating the type of each module. This type information indicates whether the module is to be executed by processing board 5, processing board 6, by intelligent circuitry which may be present on the motherboard 4 or by the circuitry of image sensor board 3, and, if these boards exist in various versions, the version for which the module is adapted. I. e. the type information associated to each software module is specific to it, but in the software pool 8 various software modules for controlling execution of a same task by different versions of a given type of board may coexist, so that when e. g. processing board 5 is removed and is replaced by a different version, the fact may be detected automatically, and the correct module type is selected for execution from software pool 8, provided that it can be found therein.

If the appropriate software module is not found in the software pool 8, a request is issued via data line 7 to download the appropriate software module from an external source, which may be a base station, a disk drive, a replaceable solid state memory, such as a memory stick, or other sources which may be connected to the data line 7 directly or via the base station and/or via a network, e. g. the internet. In this way, if a new component is plugged into one of the sockets of motherboard 4, the necessary software for operating it may be downloaded directly from a manufacturer's host computer.

When executing the software modules stored in the software pool 8, boards 5, 6 may read their instructions directly, one by one in the order in which they are executed and at the time of execution, from software pool 8, if sufficient transmission bandwidth is available between the boards 5, 6 and software pool 8. In this way, the necessity of providing the processing boards 5, 6 with local program memory is avoided, whereby the cost of the entire system is reduced. Further, since the behaviour of the processing boards 5, 6 is determined completely by the associated operating software module of modules stored in pool 8, boards may be quickly and conveniently replaced or swapped from one camera system to an other without a risk of the behaviour of the boards being influenced by the environment in which they where used previously.

If bandwidth between the software pool 8 and the boards is short, or if a specific board places a severe load on the reading bandwidth of software pool 8, such a board may be provided with a local storage 9, shown for board 6 in Fig. 1, into which each software module associated to this particular board 6 is copied from pool 8, and from where it is read by a local processor of that board 6 at execution time.

In the embodiment of Fig. 1, the motherboard 4 has an identity code 10 built into it, which is read and verified by one or more of the software modules of pool 8 prior to their execution. Only if the verification of the ID code 10 succeeds, these software modules will be executed correctly. In this way, a manufacturer of the system and the software components can ensure that software components a user has a license only for a specific camera head will not be used on others.

Of course, such ID codes, although not shown, might be built into any other of the components of the system of Fig. 1, thus establishing an association between a specific software module and the system component, be it the mother board 4, the image sensor circuit 3 or any of processing boards 5, 6, which is licensed to execute the software module.

Of course, a software download via data line 7 my be triggered not only by the fact that a module which is needed for a given circuit board is found to be missing in software pool 8, but also by an explicit command input by a user, e.g. for updating software modules which are already present in the software pool 8 by new versions that have been published by the manufacturer. Besides, the camera system may inquire in regular intervals, on its own motion, at the manufacturer's server whether updates for the software modules stored in it are available, triggering a download when such an updated version is found to exist.

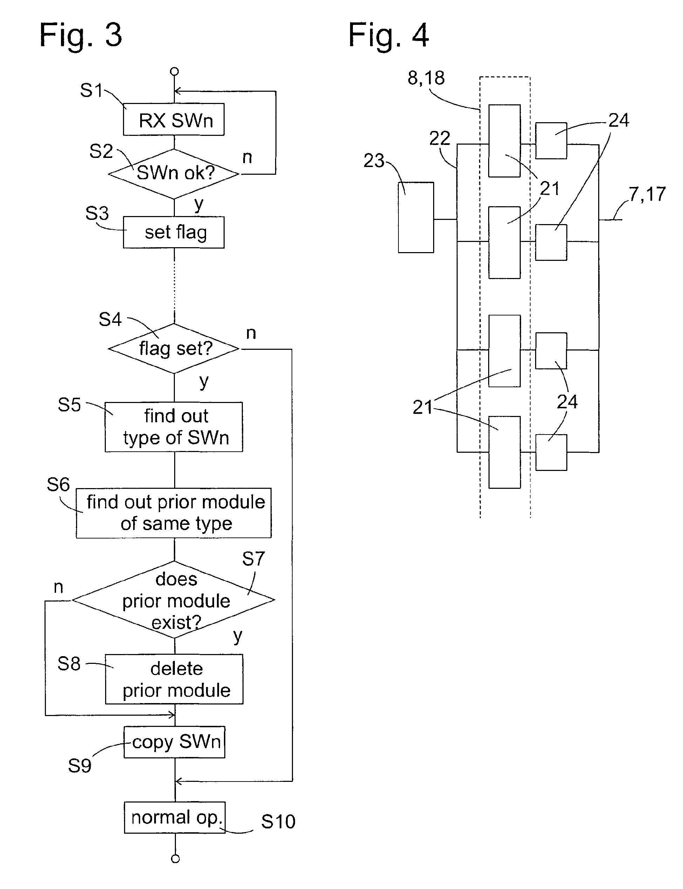

The process of installing a new software module in software pool 8 from a remote source is illustrated in Fig. 3. In step S1, the new software module SWn is downloaded via data line 7 into the second region of memory pool 8. In step S2, the camera system verifies whether the download was successful, e. g. by calculating a checksum of the data it received and comparing it to a checksum downloaded from the outside source. If the checksums do not agree, e.g. due to a power failure during the download, it is decided that the download has failed, and a new attempt to receive SWn is made. If the checksums agree, in step S3 a flag indicating the successful download of a new software module is stored at a predetermined memory address, which may be implemented in the same memory device or devices as software pool 8. This flag is not affected if power is switched off after step S3.

At a predetermined instant, e. g. whenever the system is powered on, it is verified in step S4 whether the flag is set or not. If it is not set, operation of the system immediately starts normally in step S10. If the flag is found to be set, the module type to which SWn belongs is found out in step S5. In the next step S6, it is found out whether a prior module of the same type exists in the first region of software pool 8, which may be replaced by SWn. If such a module is found to exist in step S7, it is deleted in step S8 by declaring the memory region at occupied to be available for re-use.

By distinguishing between modules of a previously existing type and modules of a new type in step S7, it is possible, on the one hand, to implement new functions in the camera system by downloading software modules of new types, and on the other hand, a waste of storage capacity by keeping in store outdated versions of software modules is avoided.

In step S9, the new module SWn is copied from the second region into the first region of software pool 8, and, in case of a module which is to be executed by a processing board with local storage 9, in this local storage. When this has been done, the new software module SWn is ready for execution, and normal operation S10 of the system begins.

The concepts described above are applicable at other levels of a hierarchically structured system, too. Fig. 2 illustrates a camera system comprising a base station 11 and various cameras 12 which may be conventional software-controlled television cameras or one or more of which may be camera systems of the type described above referring to Fig. 1.

In the system of Fig. 2, a software pool 18 is provided in base station 11, and the various cameras 12 are adapted to download from this software pool 18 the modules required for their operation. Like motherboard 4 of Fig. 1, the base station 11 has a built in ID code 10 which is read and verified by specific software modules which are licensed to a user of base station 11 only for execution on this specific base station or on cameras 12 connected to it. The base station 11 comprises control circuitry 13 adapted to communicate with the cameras 12 and to find out types and versions of these or of the various replaceable components thereof, to select, based on this information, types and versions of software modules from pool 18 to be downloaded to the cameras 12 and, eventually, software modules which are missing in pool 18 and have to be downloaded from an external source via data line 17. The base station 11 may receive a new software module via data line 17 by carrying out mutates mutandis the procedure described above referring to Fig. 3. In the copying step S9 the new software module will usually be copied from software pool 18 of base station 11 to local storage 19 of the camera, which may be identical to the pool 8 of motherboard 4, if the concerned camera is a system according to Fig. 1. In this copying step, the software module is not removed from software pool 18 of the base station 11 but remains present therein, so that it can be downloaded to other cameras as often as desired.

In either embodiment, software pool 8, 18 and all local storage 9, 19 are preferably implemented by flash storage devices, the data contents of which remain intact when no operating power is supplied. These memory devices have rather long writing access times which may limit the download rate to the pool 8, 18 if a fast communication protocol is used on data line 7 or 17. In order to overcome this drawback, at least the second region of the software pool 8 or 18, according to an advanced embodiment, is constituted of a plurality of flash storage devices 21, as shown in Fig. 4. As an example, Fig. 4 shows four flash devices 21, but obviously, any other number, preferably a power of 2, could be provided. An address bus 22 is wired between the devices 22 and an address generator 23 such that each device 21 has a memory cell addressed by one of four consecutive addresses output by address generator 23. A communication interface comprises buffers 24 associated to the flash devices 22, which are activated whenever the associated flash device is addressed, so as to maintain input data from data line 17 present at a data port of each flash device 21 as long as required for writing the data into the device. In this way, the transmission rate on the data line may be made four times higher than the writing rate of the flash devices 21.

## Claims

1. A software-controlled camera system comprising a camera head (1; 12), a memory (8; 18), a communication interface for receiving an operating software and storing it in said memory (8; 18), and a processing unit (4-6; 13) for controlling operation of the system by executing the software stored in said memory, **characterized in that** the processing unit (4-6; 13) is adapted to execute operating software stored in a first region of said memory (8; 18) and to check for the presence of operating software in a second region of the memory (8; 18) and, in case of operating software being found in said second region, replacing it by software stored in the first region.

2. The camera system of claim 1, wherein the operating software in the first region is formed of a plurality of modules of different types, and the processing unit (4-6; 13) is adapted to determine a type of a software module found in the second region and to select the module of the same type in the first region for replacing.

3. The camera system of claim 2, comprising a memory (8, 18) for storing an indication of the type of a module stored in the second region.

4. The camera system of claim 2 or 3, wherein the storage capacity of said second region is at least the size of the largest one of the modules of the first region.

5. The camera system of one of the preceding claims, comprising a memory (8, 18) for storing an indication of whether software is validly stored in the second region.

6. The camera system of one of the preceding claims, comprising a plurality of camera heads (12).

7. The camera system of claim 6, wherein said camera heads (12) are of a plurality of different types, and there is at least one type of software module specific to each type of camera head.

8. The camera system of one of claims 1 to 5, wherein the processing unit (4-6) comprises at least one replaceable circuit board (5, 6) adapted to process video data from said one camera head (1) by executing said operating software.

9. The camera system of one of the preceding claims, wherein at least the second region of the memory is formed of a plurality of storage devices (21), successive storage addresses being assigned to different ones of said devices (21).

10. A method of configuring a software-controlled television camera system comprising the steps of downloading (S1) a new version of an operating software to a memory (8; 18) of the camera system and of executing (S10) said downloaded new version, **characterized in that** in the downloading step (S1), the new version is first downloaded to a second region of said memory (8; 18), and the new version is transferred (S9) from the second region to a first region of the memory (8; 18) for execution only if it is decided (S2, S3, S4) that the download was successful.

11. The method of claim 10, wherein a flag indicating the presence of downloaded software in the second region is set (S3) when the downloading step is completed, and it is decided (S4) that the download was successful only if the flag is found to be set.

12. The method of claim 11, wherein the flag is reset after transferring the new software to the first region.

13. The method of one of claims 10 to 12, wherein a prior operating software stored in the first region is formed of a plurality of modules of different types, the downloaded new software is accompanied by information specifying a module type of the new software, and when transferring the new software to the first memory region the prior operating software module of this type is replaced (S8, S9).

14. The method of claim 13, wherein the information specifying the module type of the new software is stored in said second memory region.

15. The method of one of claims 10 to 14, wherein the memory of the camera system comprises a plurality of storage devices and successive words of said downloaded software are stored in different ones of said storage devices.
